# EUROPÄISCHE PATENTSCHRIFT

(11) **EP 2 619 947 B1**
(45) Veröffentlichungstag und Bekanntmachung des Hinweises auf die Patenterteilung: **07.06.2017**
(21) Anmeldenummer: 11763893.2
(22) Anmeldetag: 20.09.2011
(51) Int. Cl.: G06F 13/42, H04L 12/40

(54) **VERFAHREN UND VORRICHTUNG ZUR SERIELLEN DATENÜBERTRAGUNG MIT UMSCHALTBARER DATENRATE**
METHOD AND APPARATUS FOR SERIAL DATA TRANSMISSION AT A SWITCHABLE DATA RATE
PROCÉDÉ ET DISPOSITIF DE TRANSMISSION DE DONNÉES SÉRIE AVEC DÉBIT DE DONNÉES VARIABLE

(30) Priorität: 22.09.2010 DE 102010041223
(43) Veröffentlichungstag der Anmeldung: 31.07.2013
(73) Patentinhaber: Robert Bosch GmbH, 70442 Stuttgart (DE)
(72) Erfinder: HARTWICH, Florian, 72762 Reutlingen (DE); MACHAUER, Ralf, 71672 Marbach A.N. (DE); LORENZ, Tobias, 71707 Schwieberdingen (DE); VOETZ, Frank, 74232 Abstatt (DE); HORST, Christian, 72144 Dusslingen (DE)
(86) Internationale Anmeldenummer: PCT/EP2011/066326
(87) Internationale Veröffentlichungsnummer: WO 2012/038430

(56) Entgegenhaltungen:
- WO-A1-95/06378
- SHEIKH IMRAN & MICHAEL SHORT: "Improving throughput in CAN networks: Implementing the dual-speed approach", PREPRINT PROCEEDINGS REAL-TIME NETWORKS '09, 30. Juni 2009 (2009-06-30), XP055011986, Dublin, Ireland
- CENA G ET AL: "Overclocking of controller area networks", ELECTRONICS LETTERS, IEE STEVENAGE, GB, Bd. 35, Nr. 22, 28. Oktober 1999 (1999-10-28), Seiten 1923-1925, XP006012867, ISSN: 0013-5194, DOI: 10.1049/EL:19991289 in der Anmeldung erwähnt
- ROBERT BOSCH GMBH: "CAN with Flexible Data-Rate; White Paper, Version 1.0", INTERNET CITATION, April 2011 (2011-04), Seiten 1-13, XP002658095, Gefunden im Internet: URL:http://www.bosch-semiconductors.de/med ia/pdf/canliteratur/can_fd.pdf [gefunden am 2011-08-31]

## Beschreibung

### Stand der Technik

Die Erfindung betrifft ein Verfahren sowie eine Vorrichtung zur Übertragung von Daten zwischen wenigstens zwei Teilnehmern eines Bussystems, wobei die zeitliche Dauer der übertragenen Bits zwischen mindestens zwei unterschiedlichen Werten umgeschaltet werden kann.

Beispielsweise aus der Offenlegungsschrift DE 100 00 305 A1 ist das Controller Area Network sowie eine als "Time Triggered CAN" (TTCAN) bezeichnete Erweiterung des CAN bekannt. Das beim CAN verwendete Medienzugriffssteuerverfahren beruht auf einer bitweisen Arbitrierung. Bei der bitweisen Arbitrierung können mehrere Teilnehmerstationen gleichzeitig Daten über den Kanal des Bussystems übertragen, ohne dass hierdurch die Datenübertragung gestört wird. Die Teilnehmerstationen können weiterhin beim Senden eines Bits über den Kanal den logischen Zustand (0 oder 1) des Kanals ermitteln. Entspricht ein Wert des gesendeten Bits nicht dem ermittelten logischen Zustand des Kanals, dann beendet die Teilnehmerstation den Zugriff auf den Kanal. Bei CAN wird die bitweise Arbitrierung üblicherweise in einem Arbitrierungsfeld innerhalb eines über den Kanal zu übertragenden Datenrahmens vorgenommen. Nach dem eine Teilnehmerstation das Arbitrierungsfeld vollständig an den Kanal gesendet hat, weiß sie, dass sie exklusiven Zugriff auf den Kanal hat. Somit entspricht das Ende der Übertragung des Arbitrierungsfelds einem Beginn eines Freigabeintervalls, innerhalb dessen die Teilnehmerstation den Kanal exklusiv nutzen kann. Gemäß der Protokollspezifikation des CAN dürfen andere Teilnehmerstationen so lange nicht auf den Kanal zugreifen, das heißt Daten an den Kanal senden, bis die sendende Teilnehmerstation ein Prüfsummenfeld (CRC-Feld) des Datenrahmens übertragen hat. Somit entspricht ein Endzeitpunkt der Übertragung des CRC-Felds einem Ende des Freigabeintervalls.

Durch die bitweise Arbitrierung wird eine zerstörungsfreie Übertragung des Datenrahmens über den Kanal erreicht. Hierdurch ergeben sich gute Echtzeiteigenschaften des CAN, wohingegen bei den Medienzugriffssteuerverfahren, bei denen der von einer Teilnehmerstation gesendete Datenrahmen aufgrund einer Kollision mit einem von einer anderen Station gesendeten weiteren Datenrahmen während der Übertragung über den Kanal zerstört werden kann, ein deutlich ungünstigeres Echtzeitverhalten haben, da es aufgrund der Kollision und der dadurch erforderlichen neuen Übertragung des Datenrahmens zu einer Verzögerung der Datenübertragung kommt.

Die Protokolle des CAN eignen sich besonders zum Übertragen kurzer Meldungen unter Echtzeitbedingungen. Sollen größere Datenblöcke über eine CAN-Domäne übertragen werden, dann wird die relativ geringe Bitrate des Kanals zu einem begrenzenden Faktor. Um die korrekte Funktion der bitweisen Arbitrierung zu gewährleisten, muss während der Arbitrierung für die Übertragung eines Bits eine in erster Linie von der Ausdehnung des Bussystems, der Signalausbreitungsgeschwindigkeit auf dem Kanal und intrinsischen Verarbeitungszeiten in den Schnittstellenmodulen der Busteilnehmer abhängige Mindestdauer eingehalten werden, denn alle Busteilnehmer müssen ein einheitliches Bild des Buszustands (0 oder 1) und gleichberechtigten Zugriff auf den Buszustand haben. Die Bitrate kann durch Verringern der Dauer der einzelnen Bits daher nicht ohne weiteres erhöht werden.

Um dennoch einen für die Programmierung einer Steuereinheit benötigten relativ großen Datenblock über eine eigentlich für den Anschluss an eine CAN-Domäne vorgesehene Kommunikationsschnittstelle hinreichend schnell übertragen zu können, schlägt die DE 101 53 085 A1 vor, die Kommunikationsschnittstelle zum Übertragen des Datenblocks vorübergehend in einen anderen Kommunikationsmodus umzuschalten, bei dem keine bitweise Arbitrierung durchgeführt wird und somit eine relativ hohe Bitrate möglich ist. Allerdings muss hierbei die Kommunikation mit den Protokollen des CAN für eine gewisse Zeit unterbrochen werden. Kann beispielsweise aufgrund eines Fehlers nicht mehr der Betrieb des Bussystems nach den CAN-Protokollen aufgenommen werden, dann kommt es zu einem Ausfall des Bussystems. Zudem kommt es durch die Übertragung eines relativ großen Datenblock zu einer erheblichen Verzögerung der nachfolgenden gemäß den Protokollen des CAN vorzunehmenden Übertragungen, so dass die Echtzeiteigenschaften des CAN beeinträchtigt werden.

DE 103 11395 A1 beschreibt ein System, bei welchem die asynchrone, serielle Kommunikation alternativ über ein asymmetrisches physikalisches oder über das symmetrische physikalische CAN-Protokoll erfolgen kann, und dadurch eine höhere Datenübertragungsrate oder -sicherheit für die asynchrone Kommunikation erzielbar ist.

DE 10 2007 051 657 A1 schlägt vor, In den exklusiven Zeitfenstern des TTCAN-Protokolles eine asynchrone, schnelle, nicht CAN-konforme Datenübertragung anzuwenden, um die übertragene Datenmenge zu erhöhen.

G. Cena und A. Valenzano behandeln In "Overclocking of controller area networks" (Electronics Letters, Vol. 35, No. 22 (1999), S. 1924) von theoretischer Seite die Auswirkungen einer Übertaktung der Busfrequenz In Teilbereichen des Datenrahmens auf die effektiv erzielte Datenrate, ohne Jedoch auf Details der Methodik und die verschiedenen Zustände und Zustandsübergänge der Busteilnehmer einzugehen. Experimentelle Untersuchungen wurden für diesen Ansatz anhand einer spezifischen Implementierung durchgeführt und veröffentlicht (Imran, Short: "improving information throughput in CAN networks: Implementing the dual-speed approach", Proceedings of the Euromicro Conference on Real-Time Systems, pp. 57-62, 2009). Diese Arbeiten beschäftigen sich allerdings nicht mit den Auswirkungen der Übertaktung auf die Sendebestätigung durch einen oder mehrere Empfänger.

Es zeigt sich aus den zitierten Schriften, dass der Stand der Technik nicht In jeder Hinsicht befriedigende Ergebnisse liefert.

### Offenbarung der Erfindung

Aufgabe der Erfindung ist es, ein Verfahren zu beschreiben, durch welches in einem CAN-Netzwerk Datenrahmen In kürzerer Zeit übertragen werden können und gleichzeitig wesentliche Eigenschaften des CAN hinsichtlich Fehlererkennung und Fehlerbehandlung sowie netzwerkweite Datenkonsistenz erhalten bleiben. Hierzu wird ein gegenüber dem CAN-Protokoll nach ISO 11898-1 bis -4 (im Folgenden Norm-CAN genannt) modifiziertes Datenübertragungsverfahren (im Folgenden Fast-CAN genannt) vorgeschlagen.

Die beschriebene Aufgabe wird durch dieses Datenübertragungsverfahren mit den Merkmalen des Anspruchs eins, sowie durch die in den unabhängigen Ansprüchen beschriebene Vorrichtung gelöst.

### Vorteile der Erfindung

Die beschriebene Aufgabe wird erfindungsgemäß dadurch gelöst, dass die zeitliche Bitlänge innerhalb eines Datenrahmens mindestens zwei unterschiedliche Werte annehmen kann, wobei für einen vorgebbaren Bereich innerhalb des Datenrahmens die zeitliche Bitlänge für alle Teilnehmer am Bus gleich bleibt, Wechsel der zeitlichen Bitlänge durch eine im selben Datenrahmen enthaltene Kennzeichnung signalisiert werden, und die Wechsel der zeitlichen Bitlänge durch Verwendung mindestens zweier unterschiedlicher Skalierungsfaktoren zwischen einer Bus-Zeiteinheit und der kleinsten Zeiteinheit oder dem Oszillatortakt im laufenden Betrieb realisiert werden.

Ein Vorteil dieses Verfahrens ist, dass die Modifikation des CAN-Protokolls hierbei auf ein Minimum beschränkt wird und insbesondere die Struktur der CAN-Datenrahmen zumindest für den Bereich zwischen SOF und CRC-Delimiter erhalten bleibt. Die Schnittstelle zum Anwendungs-Programm bleibt unverändert. Fast-CAN Controller können auch in Norm-CAN Netzwerken eingesetzt werden. In einem Netzwerk, das ausschließlich Teilnehmer mit Fast-CAN Controllern umfasst, schalten alle Teilnehmer nach der Arbitirierung in den schnellen Modus, so dass alle Synchronisations- und Fehlererkennungsmechanismen weiter ihre Aufgabe erfüllen können.

Ein weiterer Vorteil dieses Verfahrens liegt darin, dass ein Norm-CAN Controller nur minimal geändert werden muss, um als Fast-CAN Controller arbeiten zu können. Ein Fast-CAN Controller, der auch als Norm-CAN Controller arbeiten kann, ist nur unwesentlich größer als ein Norm-CAN Controller. Das Anwendungs-Programm muss nicht geändert werden, es können auch weite Teile des CAN-Conformance-Tests (ISO 16845) übernommen werden.

Die Verkürzung der Bitlänge erfolgt für ereignisgesteuerte Kommunikation mit Arbitrierung erst nach erfolgter Arbitrierung, da wie weiter oben geschildert für die Arbitrierung busweite Datenkonsistenz erforderlich ist. Es ist darüber hinaus aber auch möglich, das Fast-CAN Protokoll mit dem TTCAN-Protokoll zu kombinieren, denn auch im TTCAN werden alle Daten in CAN-Datenrahmen übertragen, deren prinzipieller Aufbau den Vorgaben der ISO 11898-1 entspricht. In diesem Fall könnten zumindest in den exklusiven Zeitfenstern der TTCAN-Matrix, in denen keine Arbitrierung stattfindet, sondern der Buszugriff exklusiv vergeben wird, auch das Adressfeld und das Control Field ganz oder teilweise mit verkürzter Bitlänge übertragen werden.

Weiterhin ist es vorteilhaft, dass die Übergänge zwischen den verschiedenen Bitlängen durch ein einfaches Statusmodell mit einfach umsetzbaren Übergangsbedingungen beschrieben werden können.

Ebenfalls von Vorteil ist, dass die Umschaltung der Bitlänge durch eine einfache Anpassung des Skalierungsfaktors zwischen Oszillatorperiode bzw. kleinster Zeiteinheit und Bus-Zeiteinheit beispielsweise mittels des Baud Rate Prescalers erfolgen kann. Voraussetzung ist hierbei natürlich, dass die Oszillatorperiode ausreichend kurz ist.

### Zeichnungen

Die Erfindung wird im weiteren anhand der Zeichnungen näher erläutert.
Figur 1 zeigt schematisch ein Zustandsdiagramm mit den verschiedenen Zuständen, die ein Fast-CAN Controller bezüglich des erfindungsgemäßen Verfahrens einnehmen kann, sowie den Übergangsbedingungen.
Figur 2 zeigt ein Beispiel für die von der Übertragungsrate abhängig unterschiedlichen Einstellungen des Bit-Timing.
Figur 3 zeigt die Struktur eines CAN-Datenrahmens im Standard Format und im Extended Format mit der erfindungsgemäßen Aufteilung in Bereiche unterschiedlicher Bitlänge und mit der Kennzeichnung durch ein reserviertes Bit.
Figur 4 zeigt ein Beispiel für die Erweiterung des Bereiches reduzierter Bitlänge bei Kombination des Verfahrens mit dem zeitgesteuerten Übertragungsverfahren des TTCAN-Protokolls, dargestellt durch eine System-Matrix.
Figur 5 zeigt die eine Möglichkeit zur Aufteilung eines Datenrahmens in einem exklusiven TTCAN-Zeitfenster in Bereiche unterschiedlicher Bitlänge.
Figur 6 zeigt die gegenüber dem Stand der Technik erweiterten Akzeptanzkriterien für CRC-Delimiter oder Acknowledge-Bit.

### Beschreibung der Ausführungsbeispiele

Im Weiteren werden Ausführungsbeispiele für das erfindungsgemäßes Verfahren und die Vorrichtung beschrieben. Diese konkreten Beispiele werden zur Erläuterung der Ausführung eingesetzt, beschränken aber nicht den Schutzumfang, der lediglich durch die Ansprüche 1 und 12 definiert ist.

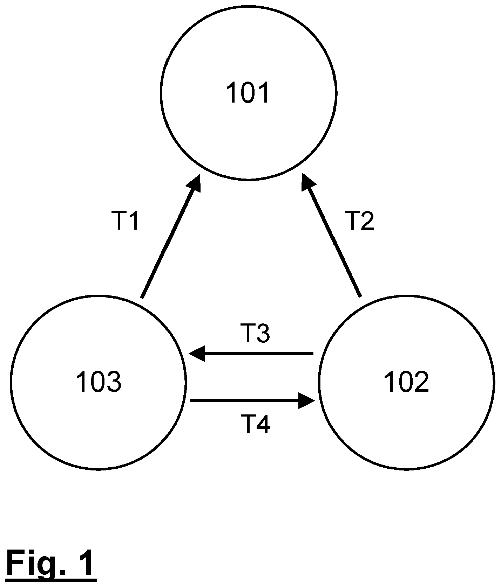

Zunächst werden in einem ersten Ausführungsbeispiels anhand der Figuren 1 bis 3 die Zustände des erfindungsgemäßen Fast-CAN Controllers und die zugehörigen Datenübertragungs-Eigenschaften, sowie deren Übergänge und die hierfür notwendigen Übergangsbedingungen beschrieben.

Figur 1 stellt die drei Betriebs-Zustände des Fast-CAN-Controllers dar: Norm-CAN 101, Fast-CAN-Arbitration 102 und Fast-CAN-Data 103.

Im Betriebs-Zustand Norm-CAN 101 arbeitet er nach dem Norm-CAN Protokoll. Im Betriebs-Zustand Fast-CAN-Arbitration 102 verhält er sich wie ein Norm-CAN Controller, kann aber auch in den Fast-CAN-Data Zustand 103 wechseln. Im Fast-CAN-Data Zustand 103 arbeitet er wie ein Norm-CAN Controller, aber mit einer kürzeren Bit-Time. Der Controller befindet sich nach dem Einschalten im Fast-CAN-Arbitration Modus 102, wenn dies durch das Anwendungs-Programm angefordert wird. Andernfalls befindet er sich nach dem Einschalten im Norm-CAN Modus 101.

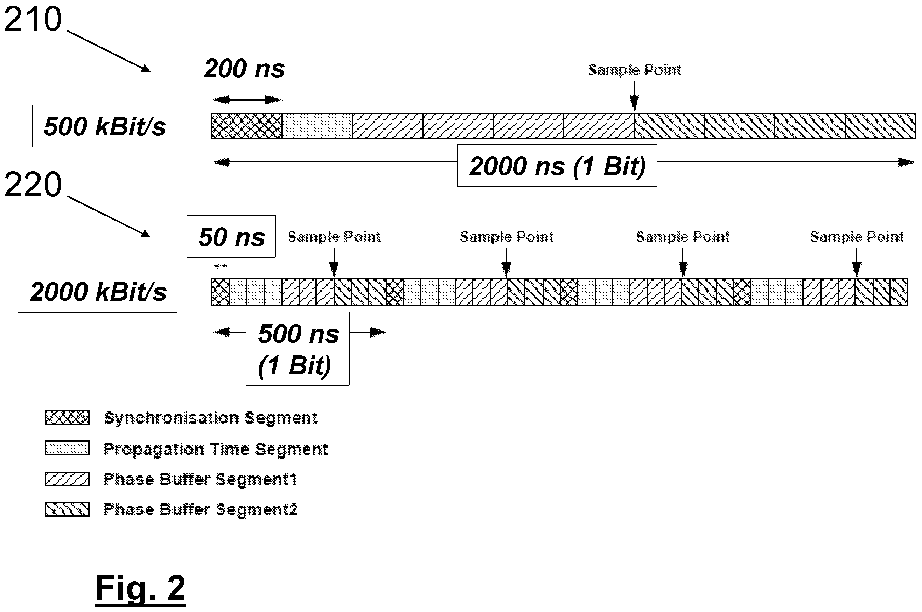

Es ist ein Wechsel der zeitlichen Bitlänge durch eine Veränderung des Skalierungsfaktors ("Prescaler") zwischen der Bus-Zeiteinheit ("time quantum") und der kleinsten Zeiteinheit ("minimum time quantum") oder dem Oszillatortakt im laufenden Betrieb vorgesehen. Dadurch wird die Länge der Bus-Zeiteinheiten und somit die Länge der Bits eingestellt. Die Bit-Time-Segmente, deren Länge in Bus-Zeiteinheiten gemessen wird, bleiben unverändert, ebenso die Regeln zur Resynchronisation und die Lage des Sample-Points. In den Zuständen Fast-CAN-Arbitration 102 und Norm-CAN 101 wird die lange Bus-Zeiteinheit verwendet, im Zustand Fast-CAN-Data 103 die kurze Bus-Zeiteinheit. Alternativ können auch die Einstellungen der Bit-Time-Segmente je nach Zustand und verwendeter Bus-Zeiteinheit verändert werden, was im Zusammenhang mit Figur 2 näher ausgeführt wird.

Im Fast-CAN-Arbitration Zustand 102 wird beispielsweise als Kennzeichnung das "reserved bit" R0, das im CAN Frame vor dem Data Length Code DLC liegt, rezessiv gesendet. Im Norm-CAN Protokoll ist spezifiziert, dass dieses Bit dominant gesendet werden muss. Wenn ein Fast-CAN Controller dieses Bit dominant empfängt, wechselt er dauerhaft in den Norm-CAN Zustand (Zustandswechsel T1 oder T2). Dadurch wird sichergestellt, dass Fast-CAN und Norm-CAN Controller im selben Netz eingesetzt werden können und dann beide im Norm-CAN Protokoll arbeiten. Es kann auch ein anderes Bit als Kennzeichnung ausgewählt werden, für das im Norm-CAN Protokoll ein fester Wert spezifiziert ist.

Ein Fast-CAN Controller im Zustand Fast-CAN-Arbitration 102, der als Kennzeichnung beispielsweise das "reserved bit" R0 vor dem DLC rezessiv empfängt oder es erfolgreich rezessiv sendet, schaltet ab dem Sample-Point dieses Bits auf die kürzere Bus-Zeiteinheit um, indem er den Skalierungsfaktor umschaltet, und wechselt in den Zustand Fast-CAN-Data 103 (Zustandswechsel T3). Der Zustandswechsel kann auch mit einem zumindest näherungsweise konstanten Zeitabstand oder nach Ablauf einer definierten Anzahl von Bus-Zeiteinheiten nach dem Sample-Point erfolgen.

Ein Fast-CAN Controller im Zustand Fast-CAN-Data 103 bleibt in diesem Zustand, bis eine von zwei Bedingungen eintrifft:
(A) Er sieht einen Grund, einen CAN-Error-Frame zu starten, oder
(B) es wird im CAN-Frame der CRC-Delimiter erreicht.
Wenn (A) oder (B) erfüllt ist, schaltet der Controller zurück in den Zustand Fast-CAN-Arbitration 102 (Zustandswechsel T4).

In dem Bereich zwischen DLC und CRC-Delimiter gibt es nach dem CAN-Protokoll zwei Gründe, einen Error-Frame zu starten: (A1) der Transmitter sieht einen Bit-Error oder (A2) ein Receiver sieht einen Stuff-Error. Am Ende des evtl. überlagerten Error-Flags, dem Beginn des Error-Delimiters, sind alle Controller im Netzwerk im Zustand Fast-CAN-Arbitration 102.

Sowohl in (A1) und (A2), als auch in (B) erfolgt der Wechsel T4 in den Zustand Fast-CAN-Arbitration 102 und somit die Umschaltung des Skalierungsfaktors an dem Sample-Point, an dem die Bedingung eintrifft, oder mit einem zumindest näherungsweise konstanten Zeitabstand zu diesem. Der Zustandswechsel kann auch nach Ablauf einer definierten Anzahl von Bus-Zeiteinheiten nach dem Sample-Point erfolgen, beispielsweise am Ende des Phase Buffer Segment 2 (vergleiche Figur 2).

Figur 2 beschreibt die Aufteilung jedes übertragenen Bits in Bit-Time-Segmente, deren Länge in Bus-Zeiteinheiten gemessen wird. Diese Einstellungen werden üblicherweise in jedem Busteilnehmer konfiguriert und dienen dazu, Signallaufzeiten auf dem Bus und Toleranzen unter den verwendeten Taktgebern oder Oszillatoren auszugleichen. In erfindungsgemäßen Fast-CAN Controllern kann es nun vorgesehen werden, dass die Einstellungen der Bit-Time-Segmente je nach Zustand und / oder aktuell verwendeter Bus-Zeiteinheit individuell vorgenommen werden. Hierzu müssen die entsprechenden Register, in denen die Konfigurationseinstellungen abgelegt werden, doppelt vorgesehen werden. Im ausgeführten Beispiel sind die einzelnen Segmente für ein Bit 210 bei einer Bus-Zeiteinheit von 200 ns sowie die Segmente für vier aufeinander folgende Bits 220 bei einer Bus-Zeiteinheit von 50 ns dargestellt. Für Bit 210 ist das Propagation Time Segment nur eine Bus-Zeiteinheit lang, während Phase Buffer Segment 1 und 2 jeweils 4 Bus-Zeiteinheiten einnehmen. Bei jedem Bit aus 220 beträgt hingegen die Länge von Propagation Time Segment sowie Phase Buffer Segment 1 und 2 jeweils 3 Bus-Zeiteinheiten.

In den Zuständen Fast-CAN-Arbitration 102 und Norm-CAN 101 wird die lange Bus-Zeiteinheit verwendet und die Bit-Time-Segmente entsprechen denen des dargestellten Bit 210, im Zustand Fast-CAN-Data 103 wird die kurze Bus-Zeiteinheit verwendet und die Bit-Time-Segmente entsprechen denen des dargestellten Bit 220.

Insbesondere kann es vorteilhaft sein, im erfindungsgemäßen Fall im Zustand Fast-CAN-Data das Propagation Time Segment möglichst klein, also beispielsweise nur eine Bus-Zeiteinheit lang, zu wählen, und die beiden Phase Buffer Segmente entsprechend möglichst groß zu wählen, um Oszillator-Toleranzen, die insbesondere bei den hohen Übertragungsraten im Zustand Fast-CAN-Data relevant werden können, möglichst gut durch den CAN-Resynchronisierungs-Mechanismus ausgleichen zu können.

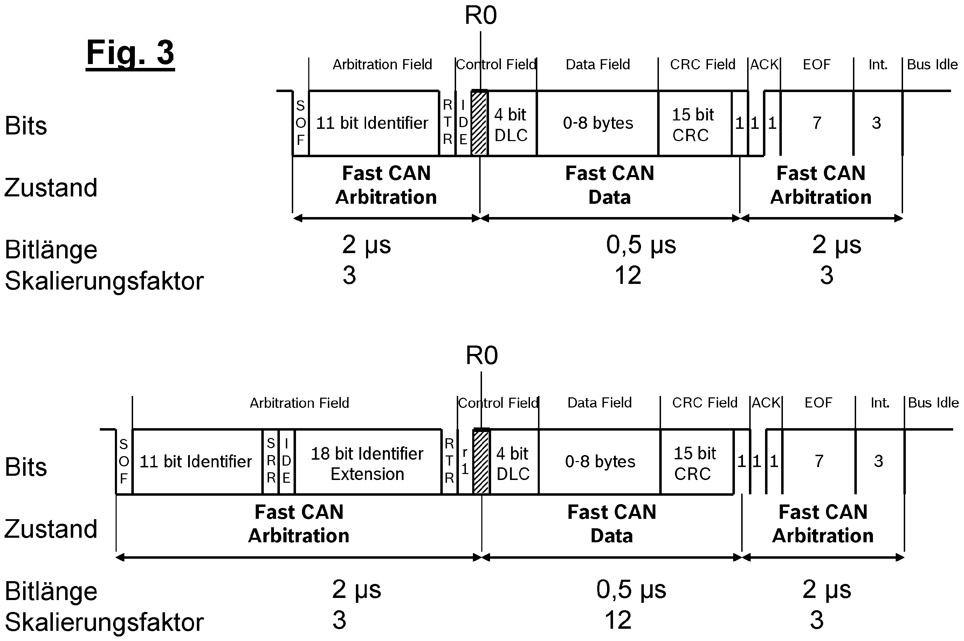

Anhand Figur 3 wird im folgenden der Aufbau der verwendeten Datenrahmen, die Bereiche mit unterschiedlicher Bitlänge, deren Abhängigkeit vom jew. Zustand des Controllers und die erfindungsgemäße Kennzeichnung erläutert.

Figur 3 zeigt die Struktur eines CAN-Datenrahmens gem. ISO11898-1 in den zwei möglichen Varianten, dem Standard Format und dem Extended Format. Für beide Varianten sind die Bereiche eingezeichnet, in denen erfindungsgemäß zwischen den Zuständen Fast-CAN-Arbitration 102 und Fast-CAN-Data 103 umgeschaltet wird. Ebenfalls dargestellt ist die damit einhergehende Umschaltung der Bitlänge, sowie die entsprechende Veränderung des Skalierungsfaktors. Schließlich wird noch die in diesem Ausführungsbeispiel gewählte Position der erfindungsgemäßen Kennzeichnung im "reserved bit" R0, das vor dem DLC übertragen wird, dargestellt.

Den Nutzen des im ersten Ausführungsbeispiel dargestellten Verfahrens für die Datenübertragungsrate veranschaulicht die folgende Rechnung: Es wird von einer Länge des Datenfeldes von 8 Byte, von Datenrahmen im Standard Format mit 11 Bit Adressierung, sowie von einer Baudrate von 500 kBit/s ausgegangen. Des weiteren wird angenommen, dass der Skalierungsfaktor nach dem "reserved bit" R0 um einen Faktor vier erhöht wird. In diesem Fall würde die Bitlänge also nach dem "reserved bit" R0 von 2 Mikrosekunden auf 0,5 Mikrosekunden reduziert. Es werden bei Vernachlässigung von möglichen Stuff-Bits in diesem Beispiel pro Datenrahmen 27 Bit (SOF, Identifier, RTR, IDE, r0 ACK-Field, EOF, Intermission) mit der normalen Bitlänge und 84 Bit (DLC, Data, CRC, CRC-Delimiter) mit der verkürzten Bitlänge übertragen, wodurch sich eine effektive Übertragungsleistung von 111 Bit in 96 Mikrosekunden ergibt. Dies entspricht bei gleicher angenommener Busauslastung einer Datenübertragungsrate, die gegenüber der nicht modifizierten Norm-CAN Übertragung um einen Faktor 2,3 erhöht ist.

Geht man bei ansonsten gleichen Bedingungen vom Extended Format mit 29 Bit Adressierung aus, werden pro Datenrahmen 47 Bit mit der normalen Bitlänge und 84 Bit mit der verkürzten Bitlänge übertragen, wodurch sich eine effektive Übertragungsleistung von 131 Bit in 136 Mikrosekunden ergibt. Dies entspricht bei gleicher angenommener Busauslastung einer gegenüber der normalen Übertragungsleistung um einen Faktor 1,9 erhöhten Datenübertragungsrate.

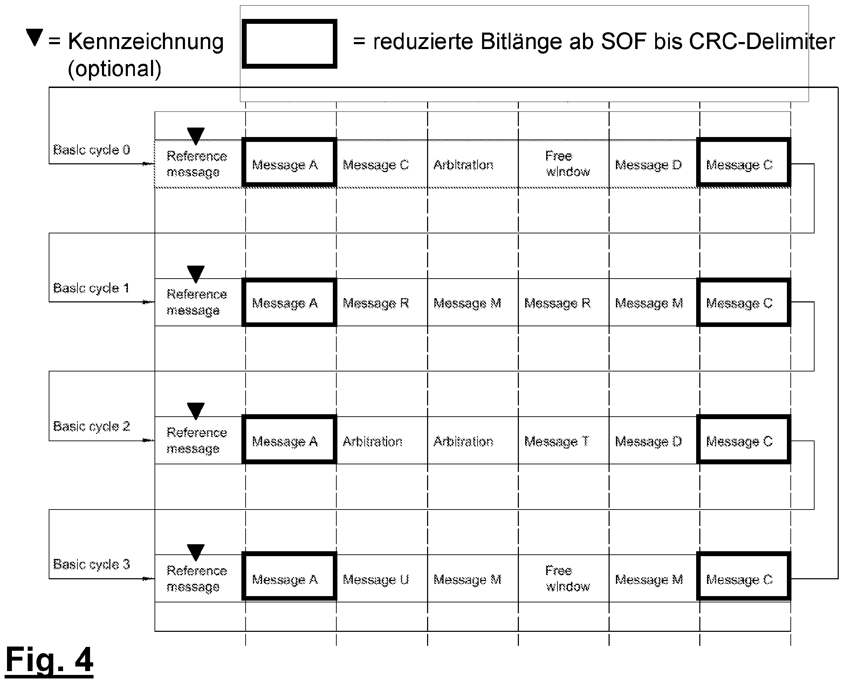

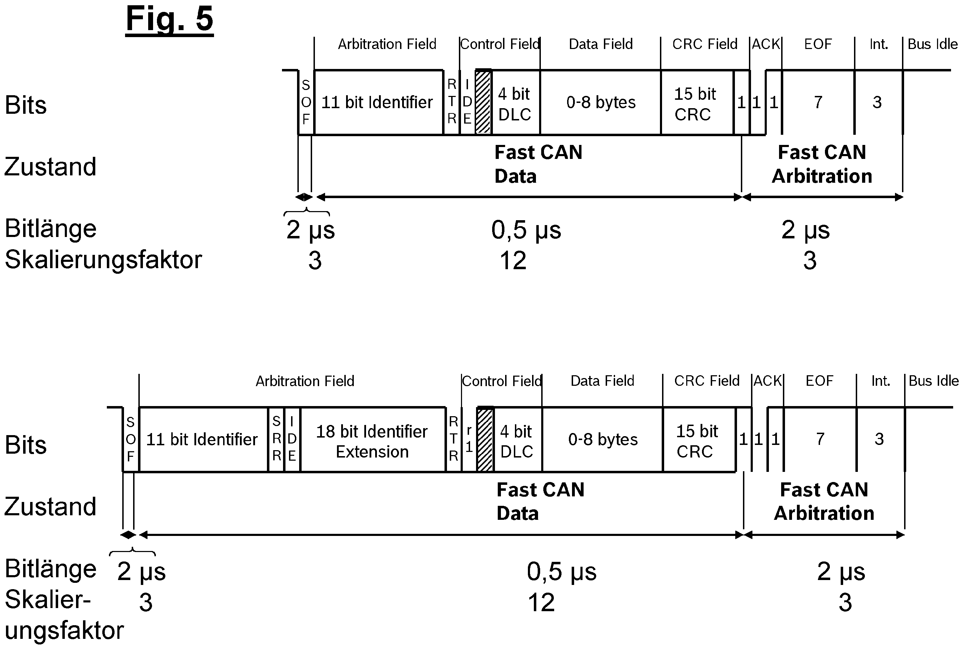

Ein weiteres Ausführungsbeispiel wird im Folgenden anhand der Figuren 4 und 5 dargestellt.

Figur 4 zeigt eine System-Matrix eines TTCAN-Netzwerkes gem. ISO11898-4 mit den dort beschriebenen Basiszyklen und Zeitfenstern. Es gibt Zeitfenster, die mit "Message A", "Message C", etc. bezeichnet sind, die exklusiv für die Übertragung bestimmter Datenrahmen zur Verfügung stehen, während in anderen Zeitfenstern, die mit "Arbitration" bezeichnet sind, der Buszugriff durch gewöhnliche CAN-Arbitirierung vergeben wird.

Im zweiten Ausführungsbeispiel werden alle Datenrahmen, für die nichts anderes beschrieben ist, gemäß dem Verfahren aus dem ersten Ausführungsbeispiel behandelt. Darüber hinaus wird für bestimmte, vorab festgelegte, exklusiv vergebene Zeitfenster eine Verkürzung der Bitlänge durch Anpassung des Skalierungsfaktors schon früher, beispielsweise ab dem SOF-Bit vorgenommen und beispielsweise bis zum Ende des CRC-Feldes aufrechterhalten. Ein Beispiel für einen derartig modifiziert übertragenen Datenrahmen ist in Figur 5 dargestellt. Als Kennzeichnung für die bevorstehende schnelle Übertragung kann beispielsweise ein reserviertes Bit der vorangehenden Referenzbotschaft herangezogen werden. Das Setzen dieses Bits würde im beschriebenen Fall signalisieren, dass die Datenrahmen, die im folgenden Basiszyklus in exklusiven Zeitfenstern übertragen werden, bereits ab dem SOF-Bit und bis zum Ende des CRC-Feldes beschleunigt, das heißt mit reduzierter Bitlänge übertragen werden.

In einer bevorzugten Ausführungsform ist es denkbar, dass lediglich diejenigen exklusive Datenrahmen, die in jedem Basiszyklus, also mit Wiederholungsfaktor eins übertragen werden, durch das Verfahren zusätzlich beschleunigt werden. Dieser Fall ist in Figur 4 dargestellt. In der beispielhaft dargestellten System-Matrix würden dann die mit "Message A" und "Message C" bezeichneten Datenrahmen nach dem erläuterten Verfahren beschleunigt übertragen werden, mit einer entsprechenden Kennzeichnung in der jeweils vorangehenden Referenzbotschaft.

Für das im zweiten Ausführungsbeispiel beschriebene Verfahren ist es auch möglich, auf die Kennzeichnung zu verzichten und festzulegen, dass in allen exklusiven Zeitfenstern die Datenrahmen grundsätzlich in einem festgelegten Bereich wie zum Beispiel zwischen SOF-Bit und dem Ende des CRC-Feldes mit verkürzter Bitlänge übertragen werden. Aus diesem Grund ist in Figur 4 die Kennzeichnung mit dem Hinweis "optional" versehen.

Den Nutzen des Verfahrens im dargestellten zweiten Ausführungsbeispiel ist höher als im ersten Beispiel, da auch die Bits von Arbitration und Control Field innerhalb der exklusiven Zeitfenster schnell übertragen werden. Die tatsächlich erreichte Datenübertragungsrate hängt zumindest vom Anteil der exklusiven Zeitfenster und der Adressierungsart ab.

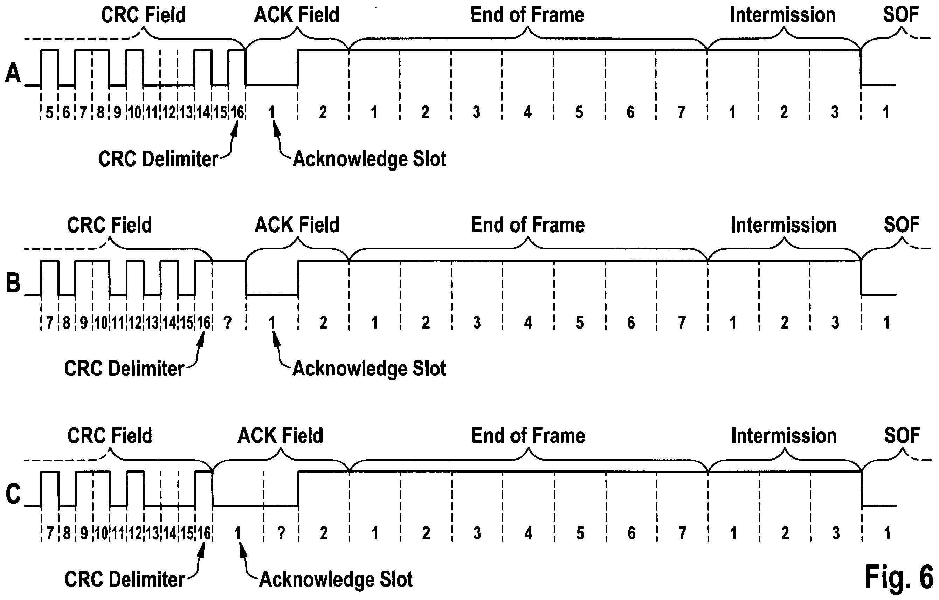

Ein gegenüber dem in der ISO 11898-1 spezifizierten Verfahren modifiziertes Verfahren kann im Fast-CAN Controller für die Behandlung der Sendebestätigung (CRC-Delimiter und Acknowledge-Slot) erforderlich sein, wie in Figur 6 näher erläutert wird.

In Figur 6 unter "A" dargestellt ist der ideale Ablauf des Überganges vom Zustand Fast-CAN-Data nach Fast-CAN-Arbitration bei sehr kurzen internen Verarbeitungs- und Signallaufzeiten. Der Sender sendet den CRC-Delimiter als ein einziges, rezessives Bit und wechselt gemäß den vorausgehend beschriebenen Ausführungsbeispielen der vorliegenden Erfindung beispielsweise am Sample-Point dieses CRC-Delimiter Bits oder nach Verstreichen des Phase Buffer Segments 2 in den Fast-CAN-Arbitration Zustand. Auch die Empfänger wechseln beispielsweise an dieser Bit-Position in den Zustand Fast-CAN-Arbitration. Diese Zustandsübergänge T4 mit der Rücksetzung des Skalierungsfaktors können, etwa aufgrund von Signallaufzeiten oder internen Verarbeitungszeiten, in den verschiedenen Busteilnehmern zu nicht exakt übereinstimmenden Zeitpunkten stattfinden. Die beteiligten Busteilnehmer setzen also zu nicht exakt übereinstimmenden Zeitpunkten ihren Skalierungsfaktor für die Bus-Zeiteinheit wieder in den Ausgangszustand. Daraus resultieren für die Busteilnehmer unterschiedliche Startzeitpunkte des nächsten Bits.

Nach Empfang des CRC-Delimiter sendet jeder Empfänger, wenn sein CRC-Check positiv war, ein einzelnes dominantes Acknowledge-Bit. Geschieht dies relativ spät, weil beispielsweise die Empfänger an entfernten Enden des Busses angeschlossen sind, kann das rezessive CRC-Delimiter-Bit länger als ein Bit erscheinen. Dieser Fall ist in Figur 6 unter "B" dargestellt. Durch Überlagerung von Acknowledge-Bits kann zudem der Acknowledge-Slot länger als ein Bit erscheinen, wie in Figur 6 unter "C" dargestellt ist. Um die phasenverschobenen Sendezeitpunkte dieser Acknowledge-Bits gegebenenfalls auszugleichen, kann die Behandlung dieser Bits in Fast-CAN Controllern dahingehend verändert werden, dass im Zustand Fast-CAN-Arbitration ein dominanter Acknowledge-Slot von ein oder zwei Bit Länge, der direkt nach dem CRC-Delimiter oder auch ein Bit später beginnt, als gültiges Acknowledge anerkannt wird.

Durch die fallende Flanke des Acknowledge-Bit sind anschließend die Busteilnehmer im Rahmen des üblichen Resynchronisations-Mechanismus wieder synchronisiert. Wenn vom Sender nach dem ersten Bit des CRC-Delimiters nicht nur ein, sondern zwei weitere rezessive Bits empfangen werden, ist dies für ihn ein Acknowledge-Error. Wenn nach dem zweiten dominanten Acknowledge-Bit ein drittes dominantes Bit empfangen wird, ist dies für alle ein Format-Error.

Auf den Acknowledge-Slot folgt, wie im Norm-CAN, ein rezessiver Acknowledge-Delimiter, der ein Bit lang ist. Wie im Norm-CAN wird ein Fast-CAN Empfänger, der einen CRC-Fehler erkannt hat, den Error-Frame erst in dem Bit nach dem Acknowledge-Delimiter starten.

Zusammenfassend liegt durch die dargestellte Erfindung eine Lösung für die gestellte Aufgabe vor, ein Verfahren zu beschreiben, durch welches in einem CAN-Netzwerk Datenrahmen in kürzerer Zeit übertragen werden können und gleichzeitig wesentliche Eigenschaften des CAN hinsichtlich Fehlererkennung und -Behandlung sowie netzwerkweite Datenkonsistenz erhalten bleiben.

## Patentansprüche

1. Verfahren zur Datenübertragung in einem Bussystem mit mindestens zwei Teilnehmerstatlonen oder Busteilnehmern, die über das Bussystem Datenrahmen austauschen,
wobei die gesendeten Datenrahmen eine logische Struktur gemäß der CAN-Spezifikation ISO 11898-1 aufweisen,
wobei die zeitliche Bitlänge innerhalb des Datenrahmens mindestens zwei unterschiedliche Werte annehmen kann,
wobei für einen ersten vorgebbaren Bereich Innerhalb des Datenrahmens die zeitliche Bitlänge größer oder gleich einem vorgegebenen Minimalwert von etwa einer Mikrosekunde Ist und In mindestens einem zweiten vorgebbaren Bereich Innerhalb des Datenrahmens die zeitliche Bitlänge gegenüber dem ersten Bereich zumindest halbiert, vorzugsweise kleiner als halbiert Ist,
wobei Wechsel der zeitlichen Bitlänge durch Verwendung mindestens zweier unterschiedlicher Skallerungsfaktoren zur Einstellung der Bus-Zeiteinheit relativ zu einer kleinsten Zeiteinheit oder dem Oszillatortakt Im laufenden Betrieb realisiert werden,
**dadurch gekennzeichnet, dass** sendende Busteilnehmer gegenüber der Spezifikation ISO 11898-1 eine um ein Bit zu späte Bestätigung (Acknowledge) des korrekten Empfanges des Datenrahmens durch einen oder mehrere Empfänger und / oder einen maximal zwei Bit langen Acknowiedge-Slot akzeptieren und nicht als Fehler behandeln.

2. Verfahren gemäß Anspruch 1, **dadurch gekennzeichnet, dass** eine um zwei oder mehr Bit zu späte Bestätigung oder ein mehr als zwei Bit langer Acknowledge-Slot von wenigstens einem Busteilnehmer als Fehler erkannt wird.

3. Verfahren gemäß Anspruch 1 oder 2, **dadurch gekennzeichnet, dass** der zweite Bereich von den Busteilnehmern unmittelbar nach Erkennung eines Grundes zum Start eines Error-Frames oder unmittelbar nach Erreichen des für die Rückumschaltung festgelegten Bits endet und der Skalierungsfaktor in den Busteilnehmern auf den Wert des ersten Bereiches gesetzt wird.

4. Verfahren gemäß einem der Ansprüche 1 bis 3, **dadurch gekennzeichnet, dass** der Buszugriff durch die in der ISO 11898-1 beschriebene Arbitrierung vergeben wird und der vorgebbare zweite Bereich innerhalb des Datenrahmens frühestens mit dem ersten Bit des Data Length Code beginnt und spätestens mit dem Bit des CRC Dellmiter endet.

5. Verfahren gemäß einem der Ansprüche 1 bis 4, **dadurch gekennzeichnet, dass** die Wechsel der zeitlichen Bitlänge durch eine Innerhalb des ersten vorgebbaren Bereiches liegende Kennzeichnung signalisiert werden.

6. Verfahren gemäß Anspruch 5, **dadurch gekennzeichnet, dass** die Kennzeichnung ein reserviertes Bit innerhalb des Control Field des Datenrahmens ist.

7. Verfahren gemäß einem der Ansprüche 1 bis 3, **dadurch gekennzeichnet, dass** der Buszugriff durch das In der ISO 11898-4 beschriebene, zeitgesteuerte Verfahren vergeben wird und der vorgebbare zweite Bereich innerhalb des Datenrahmens frühestens mit dem Start of Frame Bit des Datenrahmens beginnt und spätestens mit dem Bit des CRC Dellmiter endet.

8. Verfahren gemäß Anspruch 7, **dadurch gekennzeichnet, dass** die Adressen der Datenrahmen und die Bereiche innerhalb der Datenrahmen, in denen ein Wechsel der zeitlichen Bitlänge stattfindet, im Rahmen der Konfiguration der zeitgesteuerten Bus-Kommunikation festgelegt werden.

9. Verfahren gemäß Anspruch 7 oder 8, **dadurch gekennzeichnet, dass** die Wechsel der zeitlichen Bitlänge durch eine in einer zuvor versendeten Referenzbotschaft liegende Kennzeichnung signalisiert werden.

10. Verfahren gemäß einem der vorangegangenen Ansprüche, **dadurch gekennzeichnet, dass** der Übergang zum zweiten Bereich in den Busteilnehmern unmittelbar nach Erkennung der für die Umschaltung festgelegten Kennzeichnung oder des für die Umschaltung festgelegten Bits durchgeführt wird und der Skallerungsfaktors umgestellt wird.

11. Verfahren gemäß einem der vorangegangenen Ansprüche, **dadurch gekennzeichnet, dass** In dem ersten Bereich und in dem zweiten Bereich unterschiedliche Werte für die Aufteilung der Bits in Bit-Time-Segmente verwendet werden.

12. Vorrichtung zur Datenübertragung In einem Bussystem mit mindestens zwei Tellnehmerstationen oder Busteilnehmern und einem Bus zur Übertragung von Datenrahmen,
wobei die gesendeten Datenrahmen eine logische Struktur gemäß der CAN-Spezifikation ISO 11898-1 aufweisen,
wobei mindestens zwei unterschiedliche Skallerungsfaktoren zur Einstellung der Eus-Zeitelnheit relativ zu einer kleinsten Zeiteinheit oder dem Oszillatortakt verwendet werden,
wobei die aus der Einstellung resultierende zeitliche Bitlänge in mindestens einer Einstellung größer oder gleich einem vorgegebenen Minimalwert von etwa einer Mikrosekunde ist und in mindestens einer zweiten Einstellung gegenüber der ersten Einstellung zumindest halblert, vorzugsweise kleiner als halbiert ist, wobei die Umschaltung der Einstellung im laufenden Betrieb erfolgen kann,
**dadurch gekennzeichnet, dass** ein mittels der Vorrichtung sendender Busteilnehmer gegenüber der Spezifikation ISO 11898-1 eine um ein Bit zu späte Bestätigung (Acknowledge) des korrekten Empfanges des Datenrahmens durch einen oder mehrere Empfänger und / oder einen maximal zwei Bit langen Acknowledge-Slot akzeptiert und nicht als Fehler behandelt.

13. Vorrichtung gemäß Anspruch 12, **dadurch gekennzeichnet, dass** die mindestens zwei unterschiedlichen Werte des für die Einstellung der Bus-Zeiteinheit zu verwendenden Skallerungsfaktors oder ein Basiswert des Skalierungsfaktors sowie mindestens ein zugehöriger Multiplikator und / oder Divisor durch Beschreiben mindestens eines hierfür bereitgestellten Registers oder Datenfeldes eingestellt werden können.

14. Vorrichtung gemäß Anspruch 12, **dadurch gekennzeichnet, dass** die mindestens zwei unterschiedlichen für die Einstellung der Bit-Time-Segmente zu verwendenden Werte durch Beschreiben mindestens eines hierfür bereitgestellten Registers oder Datenfeldes eingestellt werden können.

15. Vorrichtung gemäß einem der Ansprüche 12 bis 14, **dadurch gekennzeichnet, dass** die Vorrichtung Mittel umfasst, um eines der Verfahren gemäß Anspruch 1 bis 11 auszuführen.

## Claims

1. Method for transmitting data in a bus system with at least two subscriber stations or bus subscribers which exchange data frames via the bus system,
wherein the transmitted data frames have a logical structure according to the CAN specification ISO 11898-1,
wherein the chronological bit length within the data frame can assume at least two different values,
wherein for a first predefinable region within the data frame the chronological bit length is greater than or equal to a predefined minimum value of approximately one microsecond, and in at least one second predefinable region within the data frame the chronological bit length is at least halved, preferably less than half, compared to the first region,
wherein changes in the chronological bit length are implemented by using at least two different scaling factors for setting the bus time unit relative to a minimum time unit or the oscillator clock in ongoing operation,
**characterized in that** transmitting bus subscribers accept, with respect to the specification ISO 11898-1, a confirmation (acknowledge), which is too late by one bit, of the correct reception of the data frame by one or more receivers and/or accept an acknowledge slot which is at maximum two bits long and do not treat it as an error.

2. Method according to Claim 1, **characterized in that** a confirmation which is too late by two or more bits or an acknowledge slot of at least one bus subscriber which is more than two bits long is detected as an error.

3. Method according to Claim 1 or 2, **characterized in that** the second region of the bus subscribers ends directly after the detection of a reason for starting an error frame or directly after the bit which has been defined for the switching back has been reached, and the scaling factor in the bus subscribers is set to the value of the first region.

4. Method according to one of Claims 1 to 3, **characterized in that** the bus access is predefined by the arbitration described in ISO 11898-1, and the predefinable second region within the data frame starts at the earliest with the first bit of the data length code and ends at the latest with the bit of the CRC delimiter.

5. Method according to one of Claims 1 to 4, **characterized in that** the changes of the chronological bit length are signalled by a marker located within the first predefinable region.

6. Method according to Claim 5, **characterized in that** the marker is a reserved bit within the control field of the data frame.

7. Method according to one of Claims 1 to 3, **characterized in that** the bus access is predefined by the timed method which is described in ISO 11898-4, and the predefinable second region within the data frame starts at the earliest with the start of frame bit of the data frame and ends at the latest with the bit of the CRC delimiter.

8. Method according to Claim 7, **characterized in that** the addresses of the data frames and the regions within the data frames in which a change of the chronological bit length takes place are defined within the scope of the configuration of the timed bus communication.

9. Method according to Claim 7 or 8, **characterized in that** the changes in the chronological bit length are signalled by a marker located in a previously transmitted reference message.

10. Method according to one of the preceding claims, **characterized in that** the transition to the second region in the bus subscribers is carried out directly after the detection of the marker which is defined for the switching over process or the bit which is defined for the switching over process, and the scaling factor is switched over.

11. Method according to one of the preceding claims, **characterized in that** different values for the apportioning of the bits into bit time segments are used in the first region and in the second region.

12. Device for transmitting data in a bus system having at least two subscriber stations or bus subscribers and a bus for transmitting data frames, wherein the transmitted data frames have a logical structure according to the CAN specification ISO 11898-1,
wherein at least two different scaling factors are used to adjust the bus time unit relative to the minimum time unit or the oscillator clock,
wherein the chronological bit length which results from the setting is, in at least one setting, greater than or equal to a predefined minimum value of approximately one microsecond and is at least halved, preferably less than half, in at least a second setting compared to the first setting, wherein the switching over of the setting can take place during ongoing operation,
**characterized in that** a bus subscriber which transmits by means of the device accepts, with respect to the specification ISO 11898-1, a confirmation (acknowledge), which is too late by one bit, of the correct reception of the data frame by one or more receivers and/or accepts an acknowledge slot which is at maximum two bits long and does not treat it as an error.

13. Device according to Claim 12, **characterized in that** the at least two different values of the scaling factor which is to be used for setting the bus time unit or a base value of the scaling factor and at least one associated multiplier and/or divisor can be set by describing at least one register or data field which is made available for this purpose.

14. Device according to Claim 12, **characterized in that** the at least two different values which are to be used for setting the bit time segments can be set by describing at least one register or data field which is made available for this purpose.

15. Device according to one of Claims 12 to 14, **characterized in that** the device comprises means for carrying out one of the methods according to Claims 1 to 11.

## Revendications

1. Procédé de transmission de données dans un système de bus comportant au moins deux stations d'abonnés ou abonnés de bus qui échangent des trames de données par l'intermédiaire du système de bus,
dans lequel les trames de données émises présentent une structure logique conforme à la spécification CAN ISO 11898-1,
dans lequel la longueur binaire temporelle au sein de la trame de données peut avoir au moins deux valeurs différentes,
dans lequel, pour une première plage pouvant être prédéterminée à l'intérieur de la trame de données, la longueur binaire temporelle est supérieure ou égale à une valeur minimale prédéterminée d'environ une microseconde et, dans au moins une deuxième plage pouvant être prédéterminée à l'intérieur de la trame de données, la longueur binaire temporelle est au moins divisée de moitié, et de préférence, inférieure à la moitié, par rapport à la première plage,
dans lequel un changement de la longueur binaire temporelle est réalisé en cours de fonctionnement par utilisation d'au moins deux facteurs d'échelle différents afin de régler l'unité de temps de bus par rapport à une unité de temps inférieure ou à l'horloge de l'oscillateur,
**caractérisé en ce que** les abonnés de bus émetteurs acceptent un acquittement (acknowledge) trop tardif d'un bit de la réception correcte de la trame de données par rapport à la spécification ISO 11898-1 par un ou plusieurs récepteurs et/ou un créneau d'acquittement d'une longueur maximale de deux bits et ne les traitent pas en tant qu'erreurs.

2. Procédé selon la revendication 1, **caractérisé en ce qu'**un acquittement trop tardif de deux bits ou plus ou un créneau d'acquittement plus long que deux bits est reconnu par au moins un abonné de bus en tant qu'erreurs.

3. Procédé selon la revendication 1 ou 2, **caractérisé en ce que** la deuxième plage des abonnés de bus se termine immédiatement après la reconnaissance d'un élément permettant de démarrer une trame d'erreur ou immédiatement après que le bit établi pour le basculement en retour a été atteint et **en ce que** le facteur d'échelle est réglé dans les abonnés de bus à la valeur de la première plage.

4. Procédé selon l'une quelconque des revendications 1 à 3, **caractérisé en ce que** l'accès au bus est attribué conformément à l'arbitrage décrit dans la norme ISO 11898-1 et **en ce que** la deuxième plage pouvant être prédéterminée à l'intérieur de la trame de données commence au plus tôt par le premier bit du code de longueur de données et se termine au plus tard par le bit du délimiteur CRC.

5. Procédé selon l'une quelconque des revendications 1 à 4, **caractérisé en ce que** les changements de la longueur binaire temporelle sont signalisés par un identificateur se situant à l'intérieur de la première plage pouvant être prédéterminée.

6. Procédé selon la revendication 5, **caractérisé en ce que** l'identificateur est un bit réservé à l'intérieur du champ de commande de la trame de données.

7. Procédé selon l'une quelconque des revendications 1 à 3, **caractérisé en ce que** l'accès au bus est attribué conformément au procédé commandé temporellement et décrit dans la norme ISO 11898-4 et **en ce que** la deuxième plage pouvant être prédéterminée à l'intérieur de la trame de données commence au plus tôt par le bit de début de trame de la trame de données et se termine au plus tard par le bit du délimiteur CRC.

8. Procédé selon la revendication 7, **caractérisé en ce que** les adresses des trames de données et les plages situées à l'intérieur des trames de données dans lesquelles il se produit un changement de la longueur binaire temporelle, sont établies dans des trames de la configuration de la communication de bus commandée temporellement.

9. Procédé selon la revendication 7 ou 8, **caractérisé en ce que** les longueurs binaires temporelles sont signalisées par un identificateur situé dans un message de référence préalablement émis.

10. Procédé selon l'une quelconque des revendications précédentes, **caractérisé en ce que** le passage à la deuxième plage est effectué dans les abonnés de bus immédiatement après la reconnaissance de l'identificateur établi pour le basculement ou du bit établi pour le basculement et **en ce que** le facteur d'échelle est modifié.

11. Procédé selon l'une quelconque des revendications précédentes, **caractérisé en ce que** des valeurs différentes de la répartition des bits dans des segments temporels binaires sont utilisées dans la première plage et dans la deuxième plage.

12. Dispositif de transmission de données dans un système de bus comportant deux stations d'abonnés ou deux abonnés de bus et un bus destiné à transmettre des trames de données,
dans lequel les trames de données émises présentent une structure logique conforme à la spécification CAN ISO 11898-1,
dans lequel au moins deux facteurs d'échelle différents sont utilisés pour régler l'unité de temps de bus par rapport à une unité de temps de bus inférieure ou à l'horloge de l'oscillateur,
dans lequel la longueur binaire temporelle résultant du réglage, pour au moins un réglage, est supérieure ou égale à une valeur minimale prédéterminée d'environ une microseconde et, pour au moins un deuxième réglage, est au moins divisée de moitié, et de préférence, inférieure à la moitié, par rapport au premier réglage, dans lequel le basculement entre les réglages peut s'effectuer en cours de fonctionnement,
**caractérisé en ce qu'**un abonné de bus effectuant une émission au moyen du dispositif accepte un acquittement (acknowledge) trop tardif d'un bit, par rapport à la spécification ISO 11898-1, de la réception correcte de la trame de données par un ou plusieurs récepteurs et/ou un créneau d'acquittement ayant une longueur maximale de deux bits et ne les traite pas en tant qu'erreurs.

13. Dispositif selon la revendication 12, **caractérisé en ce que** les au moins deux valeurs du facteur d'échelle utilisé pour le réglage de l'unité de temps de bus ou **en ce qu'**une valeur de base du facteur d'échelle et au moins un multiplicateur et/ou un diviseur associés peuvent être réglées par écriture dans au moins un registre ou un champ de données prévu à cet effet.

14. Dispositif selon la revendication 12, **caractérisé en ce que** les au moins deux valeurs différentes utilisées pour le réglage des segments temporels binaires peuvent être réglées aux valeurs utilisées par écriture dans au moins un registre ou un champ de données prévu à cet effet.

15. Dispositif selon l'une quelconque des revendications 12 à 14, **caractérisé en ce que** le dispositif comprend des moyens permettant de mettre en oeuvre le procédé selon l'une quelconque des revendications 1 à 11.
